# EUROPÄISCHE PATENTSCHRIFT

(11) **EP 4 443 388 B1**
(45) Veröffentlichungstag und Bekanntmachung des Hinweises auf die Patenterteilung: **29.01.2025**
(21) Anmeldenummer: 23166600.9
(22) Anmeldetag: 04.04.2023
(51) Int. Cl.: G06T 7/80, G06T 7/70

(54) **BESTIMMUNG EINER POSE EINER ERSTEN KAMERA RELATIV ZU EINER ZWEITEN KAMERA**
DETERMINING A POSE OF A FIRST CAMERA RELATIVE TO A SECOND CAMERA
DÉTERMINATION D'UNE POSE D'UNE PREMIÈRE CAMÉRA PAR RAPPORT À UNE SECONDE CAMÉRA

(43) Veröffentlichungstag der Anmeldung: 09.10.2024
(73) Patentinhaber: SICK AG, 79183 Waldkirch (DE)
(72) Erfinder: Aiple, Manuel, 79211 Denzlingen (DE)

(56) Entgegenhaltungen:
- PHILIPPE GIGUERE ET AL: "I see you, you see me: Cooperative localization through bearing-only mutually observing robots", INTELLIGENT ROBOTS AND SYSTEMS (IROS), 2012 IEEE/RSJ INTERNATIONAL CONFERENCE ON, IEEE, 7 October 2012 (2012-10-07), pages 863 - 869, XP032287811, ISBN: 978-1-4673-1737-5, DOI: 10.1109/IROS.2012.6385965
- BREZOV DANAIL ET AL: "Cameras Seeing Cameras Geometry", ADVANCES IN APPLIED CLIFFORD ALGEBRAS, SPRINGER INTERNATIONAL PUBLISHING, CHAM, vol. 32, no. 3, 29 April 2022 (2022-04-29), XP037813423, ISSN: 0188-7009, [retrieved on 20220429], DOI: 10.1007/S00006-022-01211-5

## Beschreibung

Die Erfindung betrifft ein Verfahren zur Bestimmung einer Pose einer ersten Kamera relativ zu einer zweiten Kamera nach dem Oberbegriff von Anspruch 1 und ein entsprechendes System zweier Kameras gemäss Anspruch 10.

Unter dem Begriff Pose wird im Folgenden die Position und/oder Orientierung in verschiedenen Freiheitsgraden verstanden. Für eine Positionsbestimmung oder Lokalisierung sind Verfahren wie SLAM (Simultaneous Localisation and Mapping) oder GPS bekannt, auch Trägheitssensoren werden dafür eingesetzt. Die erzielbare Genauigkeit ist jedoch begrenzt, und beispielsweise GPS ist in einer Innenanwendung wie einer Lagerhalle gar nicht verfügbar.

Mit Bestimmung der Pose zweier Kameras relativ zueinander können die Kamera-Koordinatensysteme ineinander umgerechnet werden. Dieser Vorgang wird auch als Registrierung bezeichnet. Dazu werden regelmäßig spezielle Kalibrierobjekte eingesetzt, die gemeinsam beobachtet werden.

Es ist bekannt, dass sich eine Kamera bezüglich eines Markers orientiert. Das beruht letztlich auf Triangulation von Referenzmerkmalen des Markers, insbesondere sogenannter Passermarken (Fiducial Marker), die ausreichend Merkmale bieten, um die Pose zu rekonstruieren. Ein bekanntes Vision-System auf Basis von Fiducial Markern ist April-Tag, s. https://april.eecs.umich.edu/software/apriltag.html einschließlich einer dort angeführten Literaturliste. Es umfasst eine in C implementierte Bibliothek mit Funktionen unter anderem zur Bestimmung von 3D-Position, Orientierung und Identität der Marker. Eine Alternative ist ArUco, mit einem Tutorial unter https://docs.opencv.org/4.x/d5/dae/tutorial_aruco detection.html, s. hierzu auch die Arbeit Garrido-Jurado, Sergio, et al., "Automatic generation and detection of highly reliable fiducial markers under occlusion", Pattern Recognition 47.6 (2014): 2280-2292. VuMarks bietet eine weitere Klasse spezieller künstlicher Marker, s. https://li-brary.vuforia.com/objects/vumarks. Die Arbeit von Shabalina et al., "Comparing fiducial markers performance for a task of a humanoid robot self-calibration of manipulators: A pilot experimental study", International Conference on Interactive Collaborative Robotics, Springer, Cham, 2018 beschreibt eine praktische Studie mit verschiedenen Fiducial Markern.

Die bekannten Marker-basierten Verfahren setzen eine Installation aus mehreren zueinander fix angeordneten Markern oder jedenfalls Markermerkmalen zur Messung der Rotationen und des Abstands voraus. Die Position der Marker zueinander muss genau bekannt sein und darf sich nicht verändern. Dabei sollten die Marker für eine genaue Messung vor allem über größere Abstände weit voneinander entfernt angeordnet werden. Dies erschwert nicht nur die Umsetzung, sondern macht die Installation anfälliger für Verformungen auf Kosten der Messgenauigkeit. Außerdem ist bei einer Triangulation die Messung für einige Freiheitsgrade weniger genau als für andere. Während nämlich die Lokalisierung der aufnehmenden Kamera bezüglich des Markers recht präzise möglich ist, trifft dies je nach Entfernung und Größe des Markers auf die Bestimmung von dessen Orientierung und Abstand nicht immer zu.

Motion-Capturing-Verfahren verfolgen ebenfalls Marker, um die erfasste Bewegung zu rekonstruieren. Das ist jedoch eine Anwendung und keine Verbesserung der Marker-basierten Posenbestimmung.

Bekannt sind ferner sogenannte Laser-Tracking-Verfahren, in denen ein Laserstrahl automatisch einem Reflektor folgt. Für die Nachführung des Laserstrahls wird aber eine sehr präzise Mechanik benötigt, und durch die beweglichen Teile wird das Verfahren vergleichsweise anfällig und langsam.

In der Arbeit von Dhiman, Vikas, Julian Ryde, and Jason J. Corso, "Mutual localization: Two Camera Relative 6-DOF Pose Estimation from Reciprocal Fiducial Observation", 2013 IEEE/RSJ International Conference on Intelligent Robots and Systems. IEEE, 2013 beobachten zwei Kameras jeweils gegenseitig einen Fiducial Marker der anderen Kamera. Die genannten Nachteile einer triangulationsbasierten Posenbestimmung werden damit nicht überwunden.

Neben den sehr weit verbreiteten Kameras zur Aufnahme zweidimensionaler Bilder gibt es auch verschiedene Arten von 3D-Kameras. Eine derartige Kamera misst einen Abstand und gewinnt dadurch eine Tiefeninformation. Die erfassten dreidimensionalen Bilddaten mit Abstands- oder Entfernungswerten für die einzelnen Pixel werden auch als 3D-Bild, Entfernungsbild oder Tiefenkarte bezeichnet. Zur Ermittlung der Tiefeninformationen sind verschiedene Verfahren bekannt. Davon soll hier eine auf einem Phasenverfahren basierende Lichtlaufzeitmessung (TOF, Time of Flight oder Lidar, Light Detection and Ranging) näher betrachtet werden.

Dabei wird eine Szene mit amplitudenmoduliertem Licht ausgeleuchtet. Das aus der Szene zurückkehrende Licht wird empfangen und mit der gleichen Frequenz demoduliert, die auch für die Modulation des Sendelichts verwendet wird (Lock-In-Verfahren). Aus der Demodulation resultiert ein Amplitudenmesswert, der einem Abtastwert des Empfangssignals entspricht. Für die Phasenbestimmung eines periodischen Signals sind nach dem Nyquist-Kriterium mindestens zwei Abtastwerte notwendig. Deshalb wird die Messung mit unterschiedlichen relativen Phasenlagen zwischen den Signalen für die sendeseitige Modulation und die empfangsseitige Demodulation durchgeführt. Damit lässt sich dann die laufzeitbedingte absolute Phasenverschiebung zwischen Sende- und Empfangssignal ermitteln, die wiederum proportional zum Objektabstand in der Szene ist.

Eine weitere besondere Kameratechnik ist in jüngerer Zeit in Form der sogenannten ereignis- oder eventbasierten Kamera entstanden. Sie wird in Anlehnung an den visuellen Cortex auch als neuromorphologische Kamera bezeichnet. Eine herkömmliche Kamera belichtet mit einer regelmäßigen Bildwiederholrate alle ihre Pixel und liest sie dann gleichzeitig aus, um so eine der Bildwiederholrate entsprechende Anzahl stationärer zweidimensionaler Bilder pro betrachtetem Zeitraum zu gewinnen. In einer ereignisbasierten Kamera hingegen werden die Pixel asynchron verarbeitet, es gibt weder eine feste Bildwiederholrate noch ein gemeinsames Auslesen von Pixeln. Stattdessen prüft jedes Pixel einzeln, ob es eine Änderung in der Intensität feststellt. Nur in diesem Fall wird eine Bildinformation ausgegeben beziehungsweise ausgelesen, und zwar nur von diesem Pixel. Jedes Pixel ist somit eine Art unabhängiger Bewegungsdetektor. Eine erfasste Bewegung wird individuell als Ereignis gemeldet. Dadurch reagiert die ereignisbasierte Kamera äußerst schnell auf die Dynamik in der Szene. Die Bilddaten sind für das menschliche Auge nicht so intuitiv zu erfassen, weil die statischen Bildanteile fehlen, können aber bei maschinellen Auswertungen Vorteile bieten. Eine ereignisbasierte Kamera wird beispielsweise in einem Whitepaper der Firma Prophesee beschrieben, das auf deren Internetseite abgerufen werden kann.

3D-Kameras und ereignisbasierte Kameras sind aber lediglich besondere Formen von Kameras, die nicht für sich das Problem der Registrierung oder gegenseitigen Posenbestimmung zweier Kameras lösen und die dafür bisher auch nicht vorgeschlagen wurden.

Für sich bekannt sind weiterhin optische Messungen mit polarisiertem Licht sowie die Bestimmung der Orientierung einer Polarisation. Zwei Beispiele für Polarimeter zeigen die Arbeiten von Hirabayashi, Katsuhiko, and Chikara Amano, "A compact in-line polarimeter using a Faraday rotator", IEEE Photonics Technology Letters 15.12 (2003): 1740-1742 sowie Liu, H. Q., et al., "Faraday-effect polarimeter-interferometer system for current density measurement on EAST", Review of Scientific Instruments 85.11 (2014): 11D405.

Aus der EP 2 985 628 A1 ist ein Verfahren zur simultanen Datenübertragung und Abstandsmessung einer Datenlichtschranke bekannt. Dabei schicken sich die beiden Stationen der Datenlichtschranke zunächst nacheinander eine jeweilige erste Nachricht mit einem Sendezeitpunkt und dann eine jeweilige zweite Nachricht mit dem Empfangszeitpunkt der ersten Nachricht. Aus diesen Zeitpunkten werden die Signallaufzeit und daraus der Abstand bestimmt. Eine Bildaufnahme gibt es bei einer Datenlichtschranke nicht, und an einer Bestimmung einer Pose einschließlich der Orientierungen besteht kein Interesse, zumal die beiden Stationen ohnehin funktionsbedingt direkt aufeinander ausgerichtet sein müssen und daher in der Pose gar keine Freiheit besteht.

Die Arbeit von Giguere, Philippe, loannis Rekleitis, und Maxime Latulippe, "I see you, you see me: Cooperative localization through bearing-only mutually observing robots", 2012 IEEE/RSJ International Conference on Intelligent Robots and Systems, IEEE, 2012 beschreibt eine kooperative Lokalisierung von Robotern. Die Roboter weisen jeweils Kameras mit visuellen Markern auf und schließen aus gegenseitigen Beobachtungen auf ihre Position und Ausrichtung. Die Bewegung ist auf eine Ebene beschränkt.

Der Artikel von Brezov, Danail, und Michael Werman. "Cameras Seeing Cameras Geometry", Advances in Applied Clifford Algebras 32.3 (2022): 30 befasst sich mit der Bestimmung von Positionen und Orientierungen in einem Kamera-Ensemble. Zur Vereinfachung der Erkennung und Lokalisierung einer jeweiligen Kamera können daran Passermarken (Fiducials) angebracht sein.

Es ist daher Aufgabe der Erfindung, die Posenbestimmung zweier Kameras zu verbessern.

Diese Aufgabe wird durch ein Verfahren zur Bestimmung einer Pose einer ersten Kamera relativ zu einer zweiten Kamera nach Anspruch 1 und ein System nach Anspruch 10 gelöst. Das Verfahren ist auf eine beliebige Anzahl Kameras erweiterbar, insbesondere indem jeweils iterativ ein Paar aus einer Kamera mit bereits bekannter Pose und noch unbekannter Pose gebildet wird. Später in der Figurenbeschreibung wird die erste Kamera als Referenzkamera und die zweite Kamera als Objektkamera bezeichnet. Die Position und Orientierung der Pose werden aus Sicht der ersten Kamera beziehungsweise der Referenzkamera bestimmt, aber dies erfolgt ohne Beschränkung der Allgemeinheit. Es handelt sich um austauschbare Namen, beziehungsweise die Rollen sind austauschbar, und die jeweiligen Koordinaten bezüglich einer jeweiligen Kamera können nach Bestimmung der Pose ineinander umgerechnet werden. Die Pose wird in bis zu sechs Freiheitsgraden der Position und Orientierung bestimmt. Drei Freiheitsgrade betreffen die Position der zweiten Kamera bezüglich der ersten Kamera. Bevorzugt wird dies in Kugelkoordinaten ausgedrückt, nämlich einem Azimutwinkel, einem Elevationswinkel und einem Abstand. Die übrigen drei Freiheitsgrade betreffen die Orientierung der zweiten Kamera. Dies wird bevorzugt über einen Gierwinkel, einen Nickwinkel und einen Rollwinkel ausgedrückt, wobei nochmals bevorzugt die Achse des Rollwinkels die optische Achse der zweiten Kamera ist. Die beiden Kameras befinden sich wechselseitig im Sichtfeld der jeweils anderen Kamera. Sie nehmen jeweils mindestens ein Bild auf, und diese Bilder werden ausgewertet, um die Pose zu bestimmen.

Die Erfindung geht von dem Grundgedanken aus, die beiden Kameras jeweils mit einem Marker in bekannter Pose zur zugehörigen Kamera zu versehen. Mit den aufgenommenen Bildern wird somit auch der Marker erfasst und kann durch Bildverarbeitung innerhalb des jeweiligen Bildes lokalisiert werden. Daraus können jeweils zwei Winkel der aufnehmenden Kamera bestimmt werden. Der Marker ist vorzugsweise ein einfacher Marker, passiv und mit einer einfachen Struktur, die lediglich einen einzigen Referenzpunkt liefert, beispielsweise ein Kreis oder ein Kreuz. Damit ist zunächst eine Basis-Ausführungsform der Erfindung definiert, mit der die Pose in vier der genannten sechs Freiheitsgraden bestimmt wird. In weiteren Ausführungsformen wird mindestens einer der verbleibenden beiden Freiheitsgrade zusätzlich bestimmt, wofür dann womöglich komplexere Marker eingesetzt werden. Das Verfahren ist ein computerimplementiertes Verfahren, das beispielsweise in einer Recheneinheit der Kameras und/oder einer daran angeschlossenen Recheneinheit abläuft.

Die Erfindung hat den Vorteil, dass schon mit einfachen Markern die relative Orientierung der beiden Kameras zueinander gemessen werden kann. Das wird in nachfolgend erläuterten Ausführungsformen durch verschiedene zusätzliche Schritte und Kombinationen erweitert. Die einleitend genannten Abhängigkeiten der Messgenauigkeit von trigonometrischen Zusammenhängen und insbesondere von der Abbildungsgröße der Marker bestehen für das erfindungsgemäße Vorgehen jedenfalls in den meisten Varianten nicht oder jedenfalls nur in weit geringerem Ausmaß. Es können also alle Freiheitsgrade mit hoher Genauigkeit bestimmt werden. Zugleich ist die Erfindung besonders robust gegenüber mechanischen Einflüssen wie Vibrationen und Verformungen, da das verwendete Verfahren nicht auf die unveränderte Position von mehreren Kameras zueinander beziehungsweise mehrerer Marker zueinander angewiesen ist. Dies macht die Erfindung besonders interessant für dynamische Anwendungen oder in rauen Umgebungen. Bewegliche Teile wie bei einem Laser-Tracker-Verfahren gibt es nicht. Dadurch können auch schnelle Bewegungen nachvollzogen werden. Es sind allgemein sehr hohe Messraten erzielbar.

Bevorzugt werden aus der Position des zweiten Markers ein Azimutwinkel und ein Elevationswinkel der ersten Kamera und/oder aus der Position des ersten Markers ein Nickwinkel und ein Gierwinkel der zweiten Kamera bestimmt. Damit sind die jeweiligen zwei Winkel der Orientierung der aufnehmenden Kamera in den bereits vorgestellten bevorzugten Koordinaten bestimmt.

Mindestens ein Marker weist in einer ersten erfindungsgemäßen Variante eine Asymmetrie auf, und anhand der Asymmetrie wird die Orientierung des Markers erkannt, um den dritten Winkel der Orientierung der zweiten Kamera zu bestimmen. Die Asymmetrie des Markers ordnet diesem eine Orientierung zu. Der erste Marker und/oder der zweite Marker ist in dieser Ausführungsform etwas komplexer aufgebaut, um durch Bildverarbeitung zusätzlich zu einer Position im Bild auch dessen Orientierung bestimmen zu können. Daraus lässt sich dann auf den dritten Winkel der Orientierung der zweiten Kamera schließen. In den vorgestellten bevorzugten Koordinaten ist der dritte Winkel der Rollwinkel. Die Bestimmung des dritten Winkels kann auf Bildern der ersten Kamera und/oder der zweiten Kamera beruhen, mit denen der zweite Marker oder erste Marker der anderen Kamera aufgenommen ist.

Mindestens ein Marker sendet in einer alternativ oder zusätzlich vorgesehenen zweiten erfindungsgemäßen Variante als aktiver Marker ein Lichtsignal aus. Der erste Marker und/oder der zweite Marker erzeugt somit selbst Licht, statt es nur zu reflektieren oder zu remittieren, und weist dafür mindestens eine Lichtquelle auf, die beispielsweise Dauerlicht, aber auch Blinksequenzen erzeugt. Der aktive Marker kann in die zugehörige Kamera integriert oder extern sein. Insbesondere kann die Beleuchtung einer aktiven Kamera den aktiven Marker bilden, beispielsweise der Lichtsender einer TOF-Kamera. Ein aktiver Marker ist im Bild leichter zu erkennen und zu lokalisieren.

Mindestens eine Kamera ist bevorzugt als ereignisbasierte Kamera ausgebildet. Wie einleitend schon beschrieben, stellen die Lichtempfangs- oder Pixelelemente einer ereignisbasierten Kamera fest, wenn sich die von dem Pixelelement erfasste Intensität ändert, und liefert genau dann ereignisbasiert eine Bildinformation. Nur das ist ein Ereignis, und nur bei einem Ereignis wird eine Bildinformation ausgegeben oder ausgelesen. Es ist eine Art Hysterese denkbar, bei der das Pixelelement eine definierte, zu geringfügige Änderung der Intensität noch ignoriert und nicht als Ereignis auffasst. Mit einer ereignisbasierten Kamera werden prinzipbedingt veränderliche Bildmerkmale besonders leicht erfasst. Insbesondere stellt ein gepulster oder blinkender aktiver Marker in einer ansonsten unbewegten Szenerie sogar das einzige Bildmerkmal dar, das von der ereignisbasierten Kamera registriert wird, so dass eine aufwändige Merkmalsanalyse zum Lokalisieren eines Markers in einem aufgenommenen Bild entfallen kann oder jedenfalls erheblich erleichtert wird. Eine ereignisbasierte Kamera erreicht außerdem besonders hohe Messraten, die problemlos eine Größenordnung von mehreren Kilohertz erreichen oder überschreiten.

Mindestens ein Marker sendet in der zweiten erfindungsgemäßen Variante als aktiver Marker ein polarisiertes Lichtsignal aus, und durch Bestimmung der Polarisationsrichtung bei der Aufnahme wird der dritte Winkel der Orientierung der zweiten Kamera bestimmt. Dem Marker ist beispielsweise ein Polarisationsfilter als Polarisator zugeordnet, oder es ist darin integriert. Gegenüber erkennt die aufnehmende Kamera die Polarisationsrichtung mit einem zugeordneten oder integrierten Polarimeter. Die Bestimmung des dritten Winkels mittels Polarisation ist auf Seiten der ersten Kamera durch Bestimmung der Polarisationsrichtung eines polarisierten Lichtsignals von dem zweiten Marker und/oder auf Seiten der zweiten Kamera durch Bestimmung der Polarisationsrichtung eines polarisierten Lichtsignals von dem ersten Marker möglich. Die Bestimmung des dritten Winkels anhand der Polarisationsrichtung ist unabhängig von trigonometrischen Zusammenhängen und auch davon, ob ein scharfes oder vollständiges Bild des Markers aufgenommen werden konnte. Es sind sehr hohe Messraten vergleichbar mit denjenigen einer ereignisbasierten Kamera möglich, beispielsweise mit einem Faraday-Rotator wie in den einleitend genannten Arbeiten von Hirabayashi et al. und Liu et al.

Der Abstand zwischen den Kameras wird bevorzugt mit einem Lichtlaufzeitverfahren gemessen. Damit wird ein weiterer der sechs Freiheitsgrade bestimmt. Ein Lichtlaufzeitverfahren ist im Gegensatz zu einer trigonometrischen Entfernungsbestimmung auch bei größeren Abständen noch sehr genau.

Mindestens eine Kamera ist bevorzugt als 3D-Kamera ausgebildet und bestimmt den Abstand zwischen den Kameras. Für 3D-Kameras gibt es verschiedene Technologien, von denen einleitend einige genannt sind. Besonders bevorzugt ist die Kamera eine Lichtlaufzeitkamera oder TOF-Kamera. Bevorzugt wird der Abstand zu dem gegenüberliegenden Marker bestimmt, d.h. die als 3D-Kamera ausgebildete erste Kamera misst den Abstand zu dem zweiten Marker und/oder die als 3D-Kamera ausgebildete zweite Kamera misst den Abstand zu dem ersten Marker.

Der Abstand zwischen den Kameras wird bevorzugt mit einem beidseitigen Lichtsignalaustausch dadurch bestimmt, dass die Marker jeweils zu festgelegten Zeitpunkten ein Lichtsignal aussenden und eine Lichtlaufzeit aus einem Zeitversatz zwischen Aussenden des eigenen Lichtsignals und Empfangen des anderen Lichtsignals gemessen wird. Das ist eine besondere Ausführungsform eines Lichtlaufzeitverfahrens, das hier als beidseitiger Lichtsignalaustausch und später auch als bilaterale Abstandsmessung bezeichnet wird. Es zeichnet sich unter anderem durch eine höhere Reichweite aus, weil ein jeweiliges Lichtsignal nur den einfachen und nicht nach Reflexion oder Remission den doppelten Weg zurücklegen muss. Das Lichtsignal wird daher nur mit dem Quadrat und nicht mit der vierten Potenz des Abstands geschwächt. Die Zeitpunkte können insbesondere durch einen Takt festgelegt werden. Ohne Beschränkung der Allgemeinheit, denn die Rollen können getauscht werden, misst die erste Kamera den Abstand aus einem Zeitversatz zwischen Aussenden des eigenen Lichtsignals und Empfang des anderen Lichtsignals von der zweiten Kamera beziehungsweise von deren zweitem Marker. Die zweite Kamera schickt ihr Lichtsignal los, sobald sie das Lichtsignal der ersten Kamera erhalten hat. Deshalb entspricht der Zeitversatz dem doppelten Lichtweg zwischen den beiden Kameras. Auch das Prinzip der bilateralen Abstandsmessung lässt sehr hohe Messraten jenseits der Größenordnung von einigen Kilohertz zu.

Zur Synchronisierung an der einen Kamera wird der Sendezeitpunkt derart verschoben, dass das eigene Lichtsignal zeitgleich mit dem Empfang des anderen Lichtsignals ausgesendet wird. Ohne eine solche Synchronisierung würde die gegenüberliegende Kamera, im Vorabsatz hatte diese Rolle ohne Beschränkung der Allgemeinheit die zweite Kamera, nach Empfang eines Lichtsignals ihr eigenes Lichtsignal erst mit einem durch interne Verzögerungen bedingten Zeitversatz aussenden. Bei der Synchronisierung regelt die zweite Kamera diesen Zeitversatz auf Null, insbesondere in einer Phasenregelschleife. Der Zeitversatz könnte alternativ bei der Lichtlaufzeitmessung korrigiert werden, aber hierbei ist das Problem, dass die erste Kamera ihn nicht kennt und ein einfaches Lichtsignal auch nicht geeignet ist, den Zeitversatz zu übermitteln, obwohl das zumindest grundsätzlich als Alternative denkbar wäre.

Die Pose wird bevorzugt in sechs Freiheitsgraden dadurch bestimmt, dass der Abstand zwischen den Kameras mit einem Lichtlaufzeitverfahren gemessen wird oder mindestens eine Kamera als 3D-Kamera ausgebildet ist und den Abstand zwischen den Kameras misst und dass ein Marker eine Asymmetrie aufweist und anhand der Asymmetrie die Orientierung des Markers erkannt wird, um den dritten Winkel der Orientierung der zweiten Kamera zu bestimmen. In den bevorzugten oben eingeführten Koordinaten waren bereits durch Lokalisieren des Markers in den aufgenommenen Bildern der Azimutwinkel und der Elevationswinkel der ersten Kamera sowie der Nickwinkel und der Gierwinkel der zweiten Kamera bestimmt. Durch eine Abstandsmessung wird als fünfter Freiheitsgrad der Abstand gemessen, und damit ist die Position der zweiten Kamera bezüglich der ersten Kamera in Kugelkoordinaten erfasst. Die Abstandsmessung erfolgt mit einem Lichtlaufzeitverfahren oder indem eine Kamera als 3D-Kamera ausgebildet ist, wobei vorzugsweise beides zutrifft, indem die 3D-Kamera eine Lichtlaufzeitkamera ist. Der sechste Freiheitsgrad, der dritte Winkel der Orientierung der zweiten Kamera oder bevorzugt deren Rollwinkel, wird durch Bildverarbeitung aus einer Orientierung eines aufgenommenen Markers mit einer Asymmetrie ermittelt.

Die Pose wird bevorzugt in sechs Freiheitsgraden dadurch bestimmt, dass der Abstand zwischen den Kameras durch einen beidseitigen Lichtsignalaustausch gemessen wird und dass ein Marker eine Asymmetrie aufweist und anhand der Asymmetrie die Orientierung des Markers erkannt wird, um den dritten Winkel der Orientierung der zweiten Kamera zu bestimmen. In dieser Ausführungsform wird der Abstand speziell durch beidseitigen Lichtsignalaustausch beziehungsweise mit einer bilateralen Abstandsmessung bestimmt. Das ist besonders robust und funktioniert über große Reichweiten mit hoher Genauigkeit und Messrate.

Die Pose wird bevorzugt in sechs Freiheitsgraden dadurch bestimmt, dass der Abstand zwischen den Kameras mit einem Lichtlaufzeitverfahren gemessen wird oder mindestens eine Kamera als 3D-Kamera ausgebildet ist und den Abstand zwischen den Kameras misst und dass mindestens ein Marker als aktiver Marker ein polarisiertes Lichtsignal aussendet und durch Bestimmung der Polarisationsrichtung bei der Aufnahme der dritte Winkel der Orientierung der zweiten Kamera bestimmt wird. In dieser Ausführungsform wird eine Abstandsbestimmung mittels 3D-Kamera oder Lichtlaufzeitverfahren, insbesondere mittels Lichtlaufzeitverfahren durch eine 3D-Kamera in Form einer Lichtlaufzeitkamera, mit einer Bestimmung des dritten Winkels über eine Polarisationsrichtung kombiniert. Das ist robuster und genauer als eine Bestimmung der Orientierung eines Markers mit einer Asymmetrie.

Bevorzugt wird die Pose in sechs Freiheitsgraden dadurch bestimmt, dass der Abstand zwischen den Kameras durch einen beidseitigen Lichtsignalaustausch gemessen wird und mindestens ein Marker als aktiver Marker ein polarisiertes Lichtsignal aussendet und durch Bestimmung der Polarisationsrichtung bei der Aufnahme der dritte Winkel der Orientierung der zweiten Kamera bestimmt wird. Hier werden nun die beiden besonders robusten, genauen und schnellen Verfahren miteinander kombiniert, um den Abstand und den dritten Winkel zu bestimmen.

Bevorzugt weist mindestens ein Marker eine Asymmetrie auf, und es wird anhand der Asymmetrie die Orientierung des Markers erkannt, um den dritten Winkel der Orientierung der zweiten Kamera zu bestimmen, und mindestens ein Marker sendet als aktiver Marker ein polarisiertes Lichtsignal aus, und es wird durch Bestimmung der Polarisationsrichtung bei der Aufnahme erneut der dritte Winkel der Orientierung der zweiten Kamera bestimmt, um den dritten Winkel durch gegenseitige Plausibilisierung oder Verrechnung der doppelten Bestimmung genauer zu bestimmen. Der dritte Winkel wird somit doppelt mit unterschiedlichen Verfahren bestimmt, um eine besonders hohe Verlässlichkeit und Genauigkeit zu erreichen. Dabei ist nicht erforderlich, dass beide Verfahren gleichberechtigt beitragen, im Gegenteil kann eines der Verfahren grob bleiben und beispielsweise nur wenige oder gar nur zwei Orientierungen unterscheiden. Ein Beispiel hierfür ist ein Marker, der lediglich zwischen zwei Orientierungszuständen unterscheiden lässt, wie aufrecht und kopfüber. Damit kann eine Zweideutigkeit modulo 180° der Polarisationsrichtung aufgelöst werden. Die eigentliche Bestimmung des dritten Winkels leistet hier die Polarisationsmessung, der Marker mit Asymmetrie trägt lediglich die Fallunterscheidung für die genannte Zweideutigkeit modulo 180° bei.

Das erfindungsgemäße System weist eine erste Kamera mit einem ersten Marker und eine zweite Kamera mit einem zweiten Marker, wobei sich die Kameras gegenseitig in ihrem jeweiligen Sichtfeld befinden, sowie eine Steuer- und Auswertungseinheit auf, die dafür ausgebildet ist, ein Verfahren zur Bestimmung einer Pose der ersten Kamera relativ zu der zweiten Kamera gemäß einer Ausführungsform der Erfindung durchzuführen. Die Steuer- und Auswertungseinheit kann in eine erste Steuer- und Auswertungseinheit der ersten Kamera und eine zweite Steuer- und Auswertungseinheit der zweiten Kamera aufgeteilt sein, die beide direkt oder mittelbar miteinander in Kommunikationsverbindung stehen oder nicht. Die Steuer- und Auswertungseinheit kann in die jeweilige Kamera integriert oder extern oder auf interne und externe Komponenten verteilt sein. Beispiele für interne Komponenten sind digitale Rechenbausteine wie ein Mikroprozessor oder eine CPU (Central Processing Unit), ein FPGA (Field Programmable Gate Array), ein DSP (Digital Signal Processor), ein ASIC (Application-Specific Integrated Circuit), ein Kl-Prozessor, eine NPU (Neural Processing Unit), eine GPU (Graphics Processing Unit) oder dergleichen. Beispiele für externe Komponenten sind ein Computer beliebiger Bauart einschließlich Notebooks, Smartphones, Tablets, weiterhin eine Steuerung oder ein lokales Netzwerk, ein Edge-Device oder eine Cloud.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Blockdarstellung einer Kamera;
- Fig. 2: eine Darstellung einer Kamera zur Erläuterung eines Kameramodells;
- Fig. 3: eine schematische Darstellung einer Abstandsmessung mit einem Lichtlaufzeitverfahren;
- Fig. 4: eine schematische Darstellung einer Abstandsmessung, die auf beidseitigem Lichtsignalaustausch basiert;
- Fig. 5: eine schematische Darstellung zur Illustration einer Orientierungsmessung mittels Polarisation;
- Fig. 6: eine Darstellung zweier Kameras im gegenseitigen Sichtfeld zur Erläuterung der Bestimmung einer relativen Pose; und
- Fig. 7: eine Übersicht verschiedener Varianten und Kombinationen von Varianten zur Bestimmung einer relativen Pose zweier Kameras.

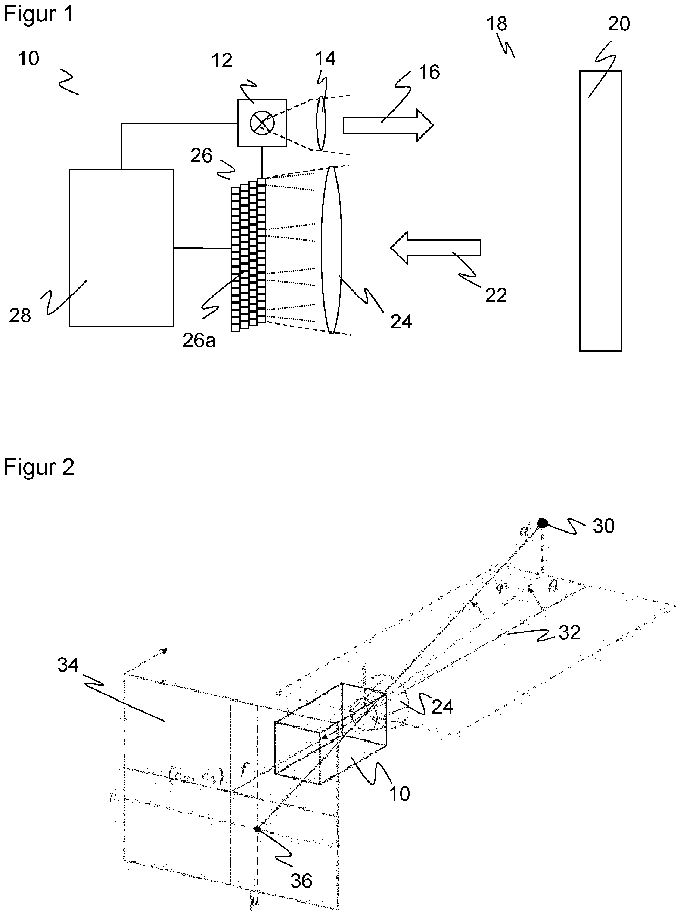

Figur 1 zeigt eine schematische Blockdarstellung einer Kamera 10, die vorzugsweise als 3D-Lichtlaufzeitkamera ausgebildet ist und die stellvertretend für eine Kamera beschrieben wird, die im Zusammenhang mit der Erfindung eingesetzt werden kann. Eine Beleuchtungseinheit 12 sendet durch eine Sendeoptik 14 moduliertes Sendelicht 16 in einen Überwachungsbereich 18 aus. Als Lichtquelle kommen LEDs oder Laser in Form von Kantenemittern oder VCSEL in Betracht. Die Beleuchtungseinheit 12 ist derart ansteuerbar, dass die Amplitude des Sendelichts 16 mit einer Frequenz typischerweise im Bereich von 1 MHz bis 1000 MHz moduliert wird. Die Modulation ist beispielsweise sinus- oder rechteckförmig, jedenfalls eine periodische Modulation. Durch die Frequenz entsteht ein begrenzter Eindeutigkeitsbereich der Abstandsmessung, so dass für große Reichweiten der Kamera 10 kleine Modulationsfrequenzen erforderlich sind. Alternativ werden Messungen bei zwei bis drei oder mehr Modulationsfrequenzen durchgeführt, um in Kombination der Messungen den Eindeutigkeitsbereich zu vergrößern.

Trifft das Sendelicht 16 in dem Überwachungsbereich 18 auf ein Objekt 20, so wird ein Teil als Empfangslicht 22 zu der Kamera 10 zurückgeworfen und dort durch eine Empfangsoptik 24, beispielsweise eine Einzellinse oder ein Empfangsobjektiv, auf einen Bildsensor 26 geführt. Der Bildsensor 26 weist eine Vielzahl von beispielsweise zu einer Matrix oder Zeile angeordneten Empfangselementen oder Empfangspixeln 26a auf. Die Auflösung des Bildsensors 26 kann von zwei oder einigen wenigen bis hin zu tausenden oder Millionen Empfangspixeln 26a reichen. Darin findet eine Demodulation entsprechend einem Lock-In-Verfahren statt. Durch wiederholte Erfassung mit über die Wiederholungen jeweils geringfügig versetzter Modulation des Sendelichts 16 werden mehrere Abtastwerte erzeugt, aus denen sich letztlich die Phasenverschiebung zwischen Sendelicht 16 und Empfangslicht 22 und damit die Lichtlaufzeit messen lässt. Die Pixelanordnung ist typischerweise eine Matrix, so dass sich eine laterale Ortsauflösung in einer X-Richtung und einer Y-Richtung ergibt, was sich mit der Z-Richtung der Abstandsmessung zu den dreidimensionalen Bilddaten ergänzt. Von einer Steuer- und Auswertungseinheit 28 werden die dreidimensionalen Bilddaten ausgelesen beziehungsweise, soweit noch nicht im Bildsensor 26 geschehen, die Abstände aus der Phasenverschiebung berechnet. In der Steuer- und Auswertungseinheit 28 können weitere Bildauswertungen und sonstige Auswertungen vorgenommen werden. Es ist denkbar, zumindest Teile der Steuer- und Auswertungsfunktionalität extern der Kamera 10 vorzusehen.

Die Erfindung ist nicht auf Lichtlaufzeitkameras beschränkt. Neben gewöhnlichen zweidimensionalen Kameras und anderen 3D-Kameras beispielsweise auf Basis von Stereoskopie oder einem Projektions- oder Lichtschnittverfahren sind hier insbesondere ereignisbasierte Kameras zu nennen, die einleitend kurz beschrieben wurden. Hier wird für jeden Bildpunkt getrennt ein Signal ausgegeben, und nur dann, wenn eine signifikante Änderung der gemessenen Intensität stattgefunden hat.

Figur 2 zeigt eine Darstellung einer nun vereinfacht dargestellten Kamera 10 zur Erläuterung eines Kameramodells. Ein Marker 30 befindet sich an einer Position (x, y, z) im Raum, was sich in Kugelkoordinaten bezüglich der Kamera 10 über den Abstand d, den Azimutwinkel θ und den Elevationswinkel φ ausdrücken lässt, gemessen jeweils gegen die optische Achse 32. Die Kamera 10 projiziert das Licht aus der Umgebung durch ihre Linse oder Empfangsoptik 24 auf ihren Bildsensor 26 in der Bildebene 34, der ortsabhängig in seinen Empfangspixeln 26a die Intensität des eintreffenden Lichts misst.

Ohne Berücksichtigung von Verzeichnungseffekten der Empfangsoptik 24 lässt sich der Zusammenhang zwischen Objektpunkten und Bildpunkten, speziell dem Marker 30 und einem zugehörigen Markerbildpunkt 36, durch ein einfaches Lochkameramodell darstellen. Es beschreibt den Zusammenhang zwischen Objektkoordinaten im Kamerakoordinatensystem (x, y, z) und Bildkoordinaten (u, v) über den Strahlensatz mit Hilfe der intrinsischen Kameraparameter Brennweite f und optischer Sensormittelpunkt (cₓ, c_{y}). Damit kann speziell für den Marker 30 als in einem Bild identifiziertem Objektpunkt der Azimutwinkel θ und Elevationswinkel φ abgeleitet werden, um so zwei der drei Kugelkoordinaten des Markers 30 zu gewinnen. In einem etwas komplexeren Kameramodell können Verzeichnungseffekte in einer an sich bekannten Weise korrigiert werden.

Durch eine zusätzliche Abstandsmessung kann noch die dritte Kugelkoordinate d erfasst werden. Das gelingt beispielsweise mit einem Lichtlaufzeitverfahren, speziell einer als Lichtlaufzeitkamera ausgebildeten Kamera 10. Später wird noch ein alternatives Verfahren mit beidseitigem Lichtsignalaustausch beschrieben. Mit einer 3D-Kamera oder einer sonstigen Abstandsmessung kann somit die Position (θ, φ, d) des Markers 30 in einem Kamerakoordinatensystem vollständig erfasst werden.

Als Marker 30 fungiert allgemein jegliche Struktur oder jegliches Objekt, mit der oder mit dem in einem Bild ein gut erkennbares Bildmerkmal erzeugt wird. Beispielsweise sind die Bildpunkte des Markers 30 heller als andere Bildpunkte, haben eine besondere Farbe, eine wiedererkennbare Form, ein Muster oder deutliche Kontrastübergänge. Je nach Ausführungsform kann der Marker 30 sehr einfach bleiben, beispielsweise ein kreisförmiger Marker, der mit seinem Mittelpunkt eine Position bezeichnet. In manchen Ausführungsformen wird ausnahmsweise ein etwas komplexerer Marker 30 mit einer Asymmetrie verwendet, beispielsweise mehreren asymmetrisch angeordneten Referenzmerkmalen, so dass eine Orientierung des Markers 30 bestimmbar ist.

Ein Marker 30 kann passiv oder aktiv sein. Passive Marker strahlen nur das Licht zurück, das von außen auf sie fällt. Dabei können sie durch die Wahl entsprechender Materialien oder Farben möglichst viel Licht zurückstrahlen, bis hin zu Reflektoren, die nahezu alles Licht zurückstrahlen, das von einer Quelle kommt. Aktive Marker senden selbst Licht aus. Die Intensität ihrer Bildpunkte ist folglich unabhängig von äußeren Lichtquellen. Aktive Marker können auch pulsierend oder mit sonstigem Zeitverhalten Licht ausstrahlen, um dadurch im Zeitverlauf von anderen Bildpunkten unterschieden werden zu können. Zum Beispiel können Differenzbilder zwischen einem Zeitpunkt, zu dem ein Marker Licht aussendet und einem Zeitpunkt, zu dem ein Marker kein Licht aussendet, berechnet werden, um einen hohen Kontrast zwischen Markerbildpunkten und Bildpunkten anderer Objekte und des Hintergrunds zu erzielen. Ein Marker 30 kann einer Kamera 10 zugeordnet oder in die Kamera 10 integriert sein. Insbesondere kann eine Beleuchtungseinheit 12 einer Kamera 10 als aktiver Marker 30 fungieren.

Ein aktiver Marker mit einem Zeitmuster seines ausgesandten Lichts kann besonders effektiv mit einer ereignisbasierten Kamera erfasst werden. Ein solcher aktiver Marker erzeugt mit jeder Aktivitätsänderung Ereignisse, und wenn die sonstige Szenerie unverändert oder nahezu unverändert bleibt, sind dies sogar die einzigen Ereignisse, so dass die Lokalisierung des Markers 30 im aufgenommenen Bild sehr einfach wird. Ist ferner das Zeitmuster der Aktivität des Markers 30 bekannt, so können die auszuwertenden Ereignisse entsprechend vorgefiltert werden. Die zu verarbeitende Datenmenge und Falschzuordnungen der Bildpunkte des Markers 30 werden durch eine ereignisbasierte Kamera erheblich reduziert.

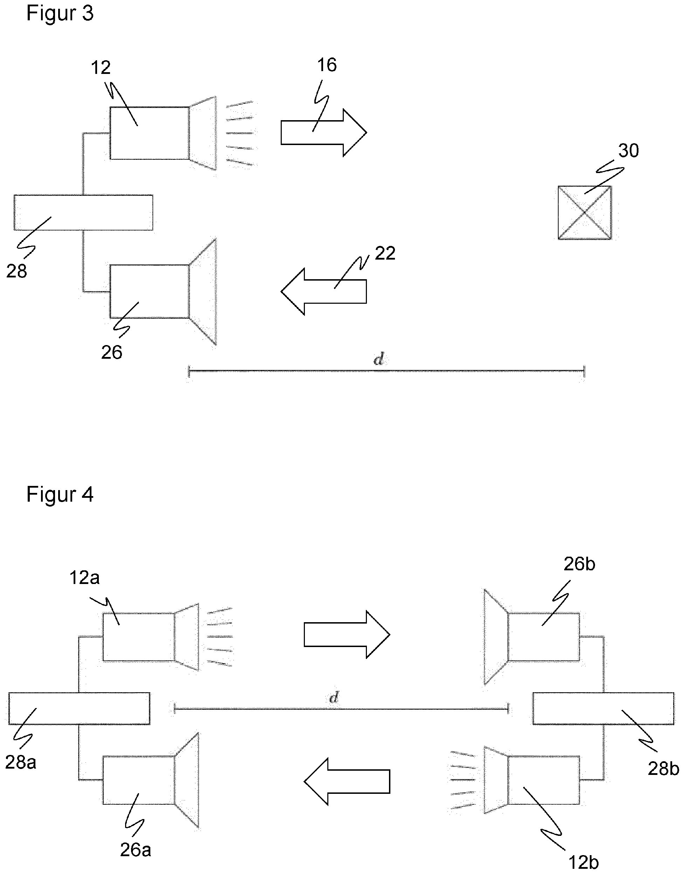

Figur 3 zeigt eine schematische Darstellung einer Abstandsmessung mit einem Lichtlaufzeitverfahren. Es ist mit der Beleuchtungseinheit 12, dem Bildsensor 26 und der Steuer- und Auswertungseinheit 28 einer Lichtlaufzeitkamera dargestellt, funktioniert aber ganz entsprechend mit einem anderen Sender, Empfänger und einer zugeordneten Kontrolleinheit. Das von der Beleuchtungseinheit 12 mit dem Sendelicht 16 ausgesandte Lichtsignal wird an einem Objekt in der Szenerie zumindest teilweise zurückgeworfen, insbesondere an einem passiven Marker 30, und das entsprechende zurückkehrende Lichtsignal mit dem Empfangslicht 22 von dem Bildsensor 26 detektiert. Die Steuer- und Auswertungseinheit 28 bestimmt die Lichtlaufzeit mit dem zu Figur 1 beschriebenen Phasenverfahren, alternativ mit einem Pulsverfahren, in dem als Lichtsignal ein kurzer Lichtpuls erzeugt wird. Der gesuchte Abstand d ergibt sich aus der Lichtlaufzeit des Lichtsignals, die wegen des Hin- und Rückwegs mit der halben Lichtgeschwindigkeit zu multiplizieren ist.

Figur 4 zeigt eine schematische Darstellung einer alternativen Abstandsmessung, die ebenfalls eine Lichtlaufzeit bestimmt, jedoch nun auf einem beidseitigen Lichtsignalaustausch basiert und die im Folgenden als bilaterale Abstandsmessung bezeichnet wird. Dargestellt sind Funktionseinheiten zweier Kameras entsprechend der Figur 1, die zugleich als aktive Marker fungieren. Ähnlich den Erläuterungen zu Figur 3 können stattdessen andere aktive Sender-/Empfängerpaare für die bilaterale Abstandsmessung verwendet werden.

Ohne Beschränkung der Allgemeinheit, denn das Verfahren funktioniert ebenso unter vertauschten Rollen, erzeugt die linke Beleuchtungseinheit 12a ein Lichtsignal, das rechts von dem Bildsensor 26b empfangen wird, woraufhin die rechte Beleuchtungseinheit 12b ein Lichtsignal erzeugt, das nun links von dem Bildsensor 26b empfangen wird. Die links zwischen Aussenden und Empfangen vergangene Zeit ist die gesuchte Lichtlaufzeit. Praktisch erfolgt eine solche Messung vorzugsweise nicht einmalig, sondern wiederholt in einem festen und bekannten Zeitablauf. Auch wenn das nicht notwendig ist, bietet sich zur Vereinfachung ein fester Takt an. Die Lichtlaufzeit ergibt sich dann aus dem Versatz des Empfangszeitpunkts zum Sendetakt.

Für eine bilaterale Abstandsmessung sollte eine Synchronisation erfolgen. Andernfalls enthält die gemessene vergangene Zeit zwischen Aussenden und Empfangen noch einen Zeitversatz, der daraus resultiert, dass rechts ein Lichtsignal erst nach internen Verarbeitungszeiten und damit gegenüber dem Empfang verzögert zurückgeschickt werden kann. Dieser Zeitversatz kann auch nicht einfach rechnerisch kompensiert werden, da er zumindest links nicht bekannt ist. Eine bevorzugte Synchronisation sieht vor, dass die sich synchronisierende Seite, in diesem Beispiel die rechte Seite, jeweils ihren Sendetakt verschiebt, um einen gemessenen Zeitversatz zwischen empfangenen Lichtsignalen und ausgesandten Lichtsignalen gegen Null zu regeln. Ein bevorzugtes Prinzip hierfür ist eine Phasenregelschleife. Im eingeschwungenen Zustand wird auf der rechten Seite ein Lichtsignal genau zu dem Zeitpunkt ausgesandt, wie das Lichtsignal von der rechten Seite empfangen wird. Der Zeitversatz durch interne Verarbeitungszeiten ist damit eliminiert, die auf der linken Seite bestimmte Zeit zwischen Aussenden und Empfangen entspricht genau der reinen Lichtlaufzeit. Das Verhalten entspricht effektiv einem Reflektieren des Lichtsignals, mit dem Vorteil, dass durch Zurückschicken eines aktiven Lichtsignals eine wesentlich größere Reichweite erzielt werden kann.

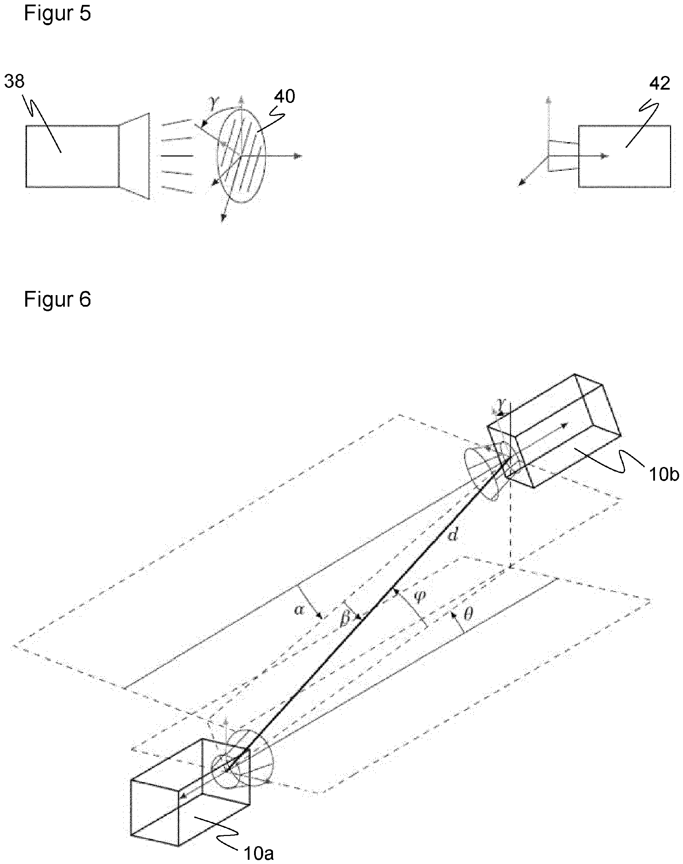

Figur 5 zeigt eine schematische Darstellung zur Illustration einer Orientierungsmessung mittels Polarisation. Auf der linken Seite wird polarisiertes Licht erzeugt, indem hier beispielhaft das Licht einer Lichtquelle 38 mittels eines Polarisationsfilters 40 linear polarisiert wird. Manche Lichtquellen, insbesondere viele Laserlichtquellen, erzeugen unmittelbar linear polarisiertes Licht, so dass das Polarisationsfilter 40 entfallen kann. Auf der rechten Seite wird die Polarisationsrichtung mittels eines Polarimeters 42 bestimmt. Dadurch wird ein Drehwinkel zwischen Lichtquelle 38 und Polarimeter42 bestimmt, d.h. ein Rollwinkel γ der Lichtquelle 38 beziehungsweise des Polarisationsfilter 40. Die polarisierte Lichtquelle 38 beziehungsweise das Polarimeter 42 sind als eigene Elemente gezeigt. In der Anwendung sind sie einer Kamera 10 und/oder einem Marker 30 zugeordnet oder zumindest teilweise darin integriert.

Bei der Polarisationsmessung wird der Rollwinkel γ noch zweideutig bestimmt, ist somit nur modulo 180° bekannt, da nicht zwischen einer bestimmten Orientierung der Polarisation und der dazu um 180° verdrehten Orientierung unterschieden werden kann. Diese Zweideutigkeit kann durch einen einfachen zusätzlichen Sensor aufgelöst werden, beispielsweise einen Trägheitssensor (IMU), oder durch einen Marker 30 mit einer einfachen Asymmetrie, die eine Unterscheidung zwischen zwei Orientierungen zulässt. Oft kann aus den Rahmenbedingungen auf den richtigen Rollwinkel γ geschlossen werden beziehungsweise es genügt ein auf 180° begrenzter Rollwinkelbereich. Beispielsweise fliegt eine Drohne selten kopfüber und ein Fahrzeug fährt nie kopfüber, womit eine der beiden Möglichkeiten der Polarisationsmessung unmittelbar ausgeschlossen werden kann.

Figur 6 zeigt eine Darstellung zweier Kameras 10a-b im gegenseitigen Sichtfeld zur Erläuterung der Bestimmung einer relativen Pose. Den Kameras 10a-b sind ohne gesonderte Darstellung in Figur 6 für verschiedene Ausführungsformen einzelne oder mehrere der zuvor beschriebenen Elemente zugeordnet oder sie sind darin zumindest teilweise integriert, nämlich Marker 30 in passiver oder aktiver, einfacher oder asymmetrischer Ausprägung, Elemente für eine Lichtlaufzeitmessung gemäß Figur 3 oder eine bilaterale Abstandsmessung gemäß Figur 4 oder Elemente für eine Polarisationsmessung gemäß Figur 5. Die Kameras 10a-b können je nach Ausführungsform gewöhnliche 2D-Kameras, ereignisbasierte Kameras oder 3D-Kameras sein, gegebenenfalls auch gemischt mit zwei unterschiedlichen Kameratypen.

Die Erfindung betrifft die Bestimmung der relativen Pose, also der Position und Orientierung zwischen zwei Kameras 10a-b. In der folgenden Erläuterung wird die eine Kamera als Referenzkamera 10a und die andere Kamera als Objektkamera 10b bezeichnet, wobei dies nur der vereinfachten Erläuterung dient, da die Rollen der Kameras 10a-b beliebig vertauscht werden können. Es sollen möglichst viele Freiheitsgrade der Position und Orientierung der Objektkamera im Koordinatensystem der Referenzkamera bestimmt werden. Wegen der vertauschbaren Rollen ist diese Formulierung keine Einschränkung einer allgemeinen Posenbestimmung zwischen zwei Kameras. Ebenfalls nur als eine bevorzugte Notation unter zahlreichen äquivalenten geometrischen Beschreibungsmöglichkeiten wird die Position der Objektkamera 10b als Azimut θ, Elevation φ und Abstand d in Kugelkoordinaten und die Orientierung der Objektkamera 10b als Gierwinkel α, Nickwinkel β und Rollwinkel γ angegeben, wobei die Rollachse mit der optischen Achse der Objektkamera 10b zusammenfällt Dabei leiten sich Gierwinkel und Nickwinkel der Objektkamera 10b aus Azimut und Elevation der Referenzkamera 10a im Koordinatensystem der Objektkamera 10b ab.

Die Kameras 10a-b sind so positioniert und ausgerichtet, dass jeweils die eine Kamera 10a-b im Sichtfeld der anderen Kamera 10b-a liegt. Für ein größeres Arbeitsfeld können die Kameras 10a-b beweglich montiert und nachgeführt werden, beispielsweise mit einer Pan-Tilt-Einheit. Die erfindungsgemäße Posenbestimmung kann dann jeweils für eine momentane Situation erfolgen. In der Darstellung der Figur 6 ist idealisiert angenommen, dass sich der jeweilige mit einer Kamera 10a-b verbundene Marker im Linsenmittelpunkt befindet. In der Realität wird außer in Sonderfällen wie bei einer kollinearen Beleuchtungseinheit 12 als Marker ein Versatz zwischen Linsenmittelpunkt und Marker auftreten, der aber konstant bleibt und daher vermessen und durch eine einfache Koordinatentransformation berücksichtigt werden kann.

Mit den bereits beschriebenen Elementen lassen sich nun zahlreiche Ausführungsformen einer Posenbestimmung zwischen zwei Kameras 10a-b realisieren, die im Folgenden beschrieben werden. In einer Basisausführung werden vier Freiheitsgrade bestimmt, nämlich in den beispielhaft gewählten Koordinaten Azimut θ, Elevation φ, Gierwinkel α und Nickwinkel β. Das ist mit allen erläuterten Technologien für die Kameras 10a-b und die Marker 30 möglich. Die Position des Markers 30 der Objektkamera 10b wird in mindestens einem Bild der Referenzkamera 10a bestimmt, um somit Azimut θ und Elevation φ zu messen, und die Position des Markers 30 der Referenzkamera 10a in mindestens einem Bild der Objektkamera 10b bestimmt, um Gierwinkel α und Nickwinkel β zu messen.

In einer als Variante 1 bezeichneten Ausführungsform wird der Rollwinkel γ gemessen, indem die Orientierung eines Markers 30 bestimmt wird. Dazu muss mindestens einer der einer Kamera 10a-b zugeordneten Marker 30 eine Asymmetrie aufweisen, beispielsweise mehrere asymmetrische angeordnete Referenzmerkmale (Fiducials), die mittels Bildverarbeitung aus einem aufgenommenen Bild mit dem Marker 30 extrahiert werden. Das lässt die Bestimmung der Orientierung des Markers 30 und somit des gesuchten Rollwinkels γ zu. Prinzipiell könnte aus den Referenzmerkmalen auch der Abstand d zumindest grob gemessen werden, aber dafür sind die Referenzmerkmale nicht eigens ausgelegt, da der Abstand d, sofern benötigt, vorzugsweise anders bestimmt wird.

In einer als Variante 2 bezeichneten Ausführungsform wird der Abstand d zwischen den Kameras 10a-b gemessen. Dazu ist mindestens eine der Kameras 10a-b als 3D-Kamera ausgelegt, vorzugsweise als Lichtlaufzeitkamera beziehungsweise TOF-Kamera. Die Lichtlaufzeit kann alternativ mit einem zugeordneten Lichtlaufzeitmesssystem bestimmt werden, wie zu Figur 3 erläutert. Wird eine TOF-Kamera eingesetzt, so fungiert vorzugsweise deren Beleuchtungseinheit als zugehöriger aktiver Marker, während gegenüber der Marker der anderen Kamera vorzugsweise passiv ausgeführt ist, um das Lichtsignal der Lichtlaufzeitmessung zurückzuwerfen.

In einer als Variante 3 bezeichneten Ausführungsform wird der Abstand d speziell durch die zu Figur 4 erläuterte bilaterale Abstandsmessung gemessen. Die bilaterale Abstandsmessung kann Komponenten der Kameras 10a-b benutzen, solche Komponenten zusätzlich in die Kameras 10a-b integrieren oder sie baulich trennen, solange eine feste mechanische Kopplung gewahrt bleibt.

In einer als Variante 4 bezeichneten Ausführungsform wird der Rollwinkel γ durch eine Polarisationsmessung bestimmt, wie sie zu Figur 5 erläutert wurde. Die polarisierte Lichtquelle 38 beziehungsweise die Kombination einer Lichtquelle 38 mit einem Polarisationsfilter 40 kann dabei als aktiver Marker 30 verwendet werden, der in die zugehörige Kamera 10a-b integriert oder ihr mit festem Ortsbezug zugeordnet ist. Auf der gegenüberliegenden Seite können Polarimeter42 und zugehörige Kamera 10b-a in einem Gerät kombiniert werden, oder das Polarimeter 42 wird extern angebracht.

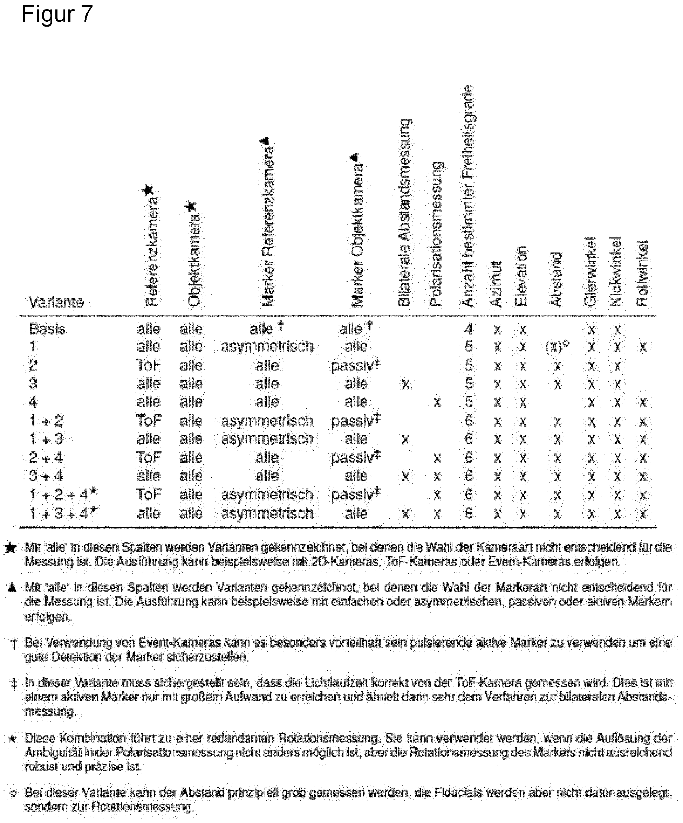

Figur 7 zeigt eine Übersicht verschiedener bevorzugter Varianten und Kombinationen von Varianten zur Bestimmung einer relativen Pose zweier Kameras. Die ersten Zeilen zu einer Basisausführung und den Varianten 1 bis 4 wurden soeben unter Bezugnahme auf die Figur 6 vorgestellt. Darüber hinaus sind verschiedene Kombinationen möglich, wobei die Tabelle in den weiteren Zeilen nicht abschließend bevorzugte Kombinationen aufführt. In allen Zeilen ist die Basisausführung zur Bestimmung von Azimut θ, Elevation φ, Gierwinkel α und Nickwinkel β eingeschlossen. Variante 1 verwendet zudem asymmetrische Marker zur Bestimmung des Rollwinkels γ. Variante 2 schließt eine Bestimmung des Abstands d ein, vorzugsweise durch Einsatz einer ToF-Kamera als Referenzkamera. Variante 3 misst den Abstand d speziell mittels einer bilateralen Abstandsmessung. Variante 4 verwendet zudem eine Polarisationsmessung zur Bestimmung des Rollwinkels γ. Ein jeweiliges "x" in der Tabelle bedeutet, dass die entsprechende Messung stattfindet und die strukturellen und funktionalen Voraussetzungen dafür gegeben sein müssen beziehungsweise dass der entsprechende Freiheitsgrad bestimmt werden kann.

Durch bestimmte Kombinationen können nun alle sechs Freiheitsgrade bestimmt werden. In einer Kombination der Varianten 1 und 2 wird der Abstand d vorzugsweise mit einem Lichtlaufzeitverfahren gemessen, insbesondere indem die Referenzkamera 10a als TOF-Kamera ausgebildet ist. Die Messung des Rollwinkels γ erfolgt durch Bestimmung der Orientierung eines asymmetrischen Markers 30. Diese Rotationsmessung kann von der Referenzkamera 10a oder der Objektkamera 10b anhand eines entsprechend gegenüberliegend angebrachten asymmetrischen Markers 30 durchgeführt werden.

In einer Kombination der Varianten 1 und 3 wird der Abstand d durch eine bilaterale Abstandsmessung bestimmt, der Rollwinkel γ wie im Vorabsatz anhand eines asymmetrischen Markers 30.

In einer Kombination der Varianten 2 und 4 wird der Abstand d wiederum vorzugsweise mit einem Lichtlaufzeitverfahren gemessen, insbesondere indem die Referenzkamera 10a als TOF-Kamera ausgebildet ist. Die Messung des Rollwinkels γ erfolgt nun durch eine Polarisationsmessung, so dass hier grundsätzlich noch eine Zweideutigkeit modulo 180° verbleibt. Für einen besonders kompakten Gesamtaufbau kann das Licht für die Polarisationsmessung von der Beleuchtungseinheit 12 der TOF-Kamera erzeugt werden, während aus der Gegenseite Objektkamera 10b und Polarimeter 42 in einem Gerät kombiniert werden. Es sind aber auch alle anderen schon genannten apparativen Aufbauten möglich.

In einer Kombination der Varianten 3 und 4 wird der Abstand d durch eine bilaterale Abstandsmessung bestimmt, der Rollwinkel γ wie im Vorabsatz durch eine Polarisationsmessung. Dadurch ist die Messung der verschiedenen Freiheitsgrade stark entkoppelt, was der Messgenauigkeit zugutekommt. Es ist möglich, aber nicht erforderlich, die bilaterale Abstandsmessung und die Polarisationsmessung zu kombinieren. Dafür kann die Abstandsmessung zumindest auf einem der beiden Lichtwege mit polarisiertem Licht durchgeführt werden, und in zumindest eine Empfangseinheit zur Bestimmung von Empfangszeitpunkten kann ein Polarimeter 42 integriert werden.

In den letzten beiden Zeilen der Tabelle in Figur 7 wird zu einer Kombination der Varianten 1 und 2 beziehungsweise 1 und 3 noch die Variante 4 hinzugenommen. Das bedeutet, dass der Rollwinkel γ doppelt einmal anhand eines asymmetrischen Markers und einmal anhand einer Polarisationsmessung bestimmt wird. Dabei können prinzipiell zwei vollständige Messungen des Rollwinkels γ durchgeführt und die Ergebnisse untereinander verglichen werden, um ein besseres Ergebnis zu behalten, oder die beiden Werte für den Rollwinkel γ werden miteinander beispielsweise als Mittelwert oder gewichteter Mittelwert verrechnet. Besonders bevorzugt wird mit dem asymmetrischen Marker nur eine ganz grobe Messung des Rollwinkels γ durchgeführt, die lediglich zwei Orientierungen unterscheidet. Dadurch kann die Doppeldeutigkeit der Polarisationsmessung aufgelöst werden, ohne hohe Anforderungen an den Marker, der lediglich eine binäre Unterscheidung ermöglichen soll.

Die Erfindung wurde für zwei Kameras 10a-b beschrieben. Das Verfahren ist darüber hinaus für mehr als zwei Kameras geeignet. Dabei kann beispielsweise eine Referenzkamera 10a mehrere Objektkameras in ihrem Sichtfeld aufnehmen. Außerdem ist möglich, Paare zwischen einer Kamera, die schon in die Posenbestimmung einbezogen ist, und einer weiteren Kamera zu bilden, deren Pose erst noch bestimmt werden muss, um so sukzessive eine beliebige Anzahl Kameras zu verarbeiten. Im Falle mehrerer Kameras sind aktive Marker besonders hilfreich, da sie es ermöglichen, verschiedene Pulsmuster zur Unterscheidung von Markern zu nutzen. Auch passive Marker ermöglichen prinzipiell eine Unterscheidbarkeit durch unterschiedliche Muster, aber dennoch ist das durch aktive Marker erleichtert, zumal auch aktive Marker zusätzlich zu den Pulsmustern eine unterschiedliche geometrische Anordnung ausnutzen können. Eine Posenbestimmung zwischen zwei Kameras 10a-b wird in einer Vielzahl von Anwendungen benötigt, beispielsweise bei einem Motion-Capturing, in der Robotik, an Kränen, an Fahrzeugen, insbesondere autonomen Fahrzeugen oder auch Drohnen sowie in Leitsystemen etwa zum Andocken oder in der Montagetechnik.

Es wurde erläutert, wie zwei Kameras 10a-b ihre relative Pose bestimmen. Das entsprechende Vorgehen ist weitergehend mit nur einer einzigen Kamera ohne Objektkamera 10b vorstellbar, um für ausgewählte Objekte deren Position zu bestimmen, insbesondere auch mit einer bilateralen Abstandsmessung. Die Messung betrifft dann nur drei Freiheitsgrade, nämlich in den oben verwendeten bevorzugten Koordinaten Azimut θ, Elevation φ und Abstand d. Eine Orientierung des Objekts wird dabei nicht gemessen. Ein solches Vorgehen ist vor allem dann sinnvoll, wenn eine Unterscheidung von Objekten mit passiven Markern nicht möglich ist oder passive Marker aufgrund des großen Abstands nicht mehr zuverlässig detektiert werden.

## Patentansprüche

1. Computer-implementiertes Verfahren zur Bestimmung einer Pose einer ersten Kamera (10a) relativ zu einer zweiten Kamera (10b), wobei sich die Kameras (10a-b) gegenseitig in ihrem jeweiligen Sichtfeld (18) befinden und jeweils mindestens ein Bild aufnehmen, und wobei die Pose durch Auswertung der Bilder bestimmt wird, wobei die erste Kamera (10a) einen ersten Marker und die zweite Kamera (10b) einen zweiten Marker aufweist, eine jeweilige Position der Marker in den aufgenommenen Bildern lokalisiert wird und aus der jeweiligen Position jeweils zwei Winkel der Orientierung der aufnehmenden Kamera (10a-b) bestimmt werden,
**dadurch gekennzeichnet,**
**dass** mindestens ein Marker eine Asymmetrie aufweist und anhand der Asymmetrie die Orientierung des Markers erkannt wird, um den dritten Winkel der Orientierung der zweiten Kamera (10b) zu bestimmen
und/oder dass mindestens ein Marker als aktiver Marker ein polarisiertes Lichtsignal aussendet und durch Bestimmung der Polarisationsrichtung bei der Aufnahme der dritte Winkel der Orientierung der zweiten Kamera (10b) bestimmt wird.

2. Verfahren nach Anspruch 1,
wobei aus der Position des zweiten Markers ein Azimutwinkel und ein Elevationswinkel der ersten Kamera (10a) und/oder aus der Position des ersten Markers ein Nickwinkel und ein Gierwinkel der zweiten Kamera (10b) bestimmt werden.

3. Verfahren nach einem der Ansprüche 1 oder 2,
wobei mindestens eine Kamera (10a-b) als ereignisbasierte Kamera ausgebildet ist.

4. Verfahren nach einem der vorhergehenden Ansprüche,
wobei der Abstand zwischen den Kameras (10a-b) mit einem Lichtlaufzeitverfahren gemessen wird und/oder mindestens eine der Kameras (10a-b) als 3D-Kamera ausgebildet ist.

5. Verfahren nach einem der vorhergehenden Ansprüche,
wobei der Abstand zwischen den Kameras (10a-b) mit einem beidseitigen Lichtsignalaustausch dadurch bestimmt wird, dass der erste Marker und der zweite Marker als aktive Marker jeweils zu festgelegten Zeitpunkten ein Lichtsignal aussenden und eine Lichtlaufzeit aus einem Zeitversatz zwischen Aussenden des eigenen Lichtsignals und Empfangen des anderen Lichtsignals gemessen wird.

6. Verfahren nach Anspruch 5,
wobei zur Synchronisierung an der einen Kamera (10a-b) der Sendezeitpunkt derart verschoben wird, dass das eigene Lichtsignal zeitgleich mit dem Empfang des anderen Lichtsignals ausgesendet wird, insbesondere in einer Phasenregelschleife.

7. Verfahren nach einem der vorhergehenden Ansprüche,
wobei die Pose in sechs Freiheitsgraden dadurch bestimmt wird, dass der Abstand zwischen den Kameras (10a-b) mit einem Lichtlaufzeitverfahren gemessen wird oder mindestens eine Kamera (10a-b) als 3D-Kamera ausgebildet ist und den Abstand zwischen den Kameras (10a-b) misst.

8. Verfahren nach einem der vorhergehenden Ansprüche,
wobei die Pose in sechs Freiheitsgraden dadurch bestimmt wird, dass der Abstand zwischen den Kameras (10a-b) durch einen beidseitigen Lichtsignalaustausch gemessen wird.

9. Verfahren nach einem der vorhergehenden Ansprüche,
wobei sowohl mindestens ein Marker eine Asymmetrie aufweist und anhand der Asymmetrie die Orientierung des Markers erkannt wird, um den dritten Winkel der Orientierung der zweiten Kamera (10b) zu bestimmen als auch mindestens ein Marker als aktiver Marker ein polarisiertes Lichtsignal aussendet und durch Bestimmung der Polarisationsrichtung bei der Aufnahme erneut der dritte Winkel der Orientierung der zweiten Kamera (10b) bestimmt wird, um den dritten Winkel durch gegenseitige Plausibilisierung oder Verrechnung der doppelten Bestimmung genauer zu bestimmen, insbesondere eine Zweideutigkeit modulo 180° der Polarisationsrichtung anhand der Asymmetrie aufzulösen.

10. System aufweisend eine erste Kamera (10a) mit einem ersten Marker und eine zweite Kamera (10b) mit einem zweiten Marker, wobei sich die Kameras (10a-b) gegenseitig in ihrem jeweiligen Sichtfeld (18) befinden, sowie eine Steuer- und Auswertungseinheit (28), die dafür ausgebildet ist, ein Verfahren nach einem der vorhergehenden Ansprüche zur Bestimmung einer Pose der ersten Kamera (10a) relativ zu der zweiten Kamera (10b) durchzuführen.

## Claims

1. A computer implemented method of determining a pose of a first camera (10a) relative to a second camera (10b), wherein the cameras (10a-b) are mutually located in their respective fields of view (18) and each record at least one image; and wherein the pose is determined by evaluating the images; wherein the first camera (10a) has a first marker and the second camera (10b) has a second marker, a respective position of the markers is localized in the recorded images, and two respective angles of the orientation of the recording camera (10a-b) are determined from the respective position,
**characterized in that**
at least one marker has an asymmetry and the orientation of the marker is recognized with reference to the asymmetry to determine the third angle of the second camera (10b);
and/or **in that** at least one marker as the active marker transmits a polarized light signal and the third angle of the orientation of the second camera (10b) is determined on the recording.

2. A method in accordance with claim 1,
wherein an azimuth angle and an elevation angle of the first camera are determined from the position of the second marker and/or a pitch angle and a yaw angle of the second camera (10b) are determined from the position of the first marker.

3. A method in accordance with one of the claims 1 or 2,
wherein at least one camera (10a-b) is configured as an event based camera.

4. A method in accordance with any one of the preceding claims,
wherein the distance between the cameras (10a-b) is measured by a time of flight process and/or at least one of the cameras (10a-b) is configured as a 3D camera.

5. A method in accordance with any one of the preceding claims,
wherein the distance between the cameras (10a-b) is determined by a bilateral light signal exchange in that the first marker and the second marker as active markers respectively transmit a light signal at fixed points in time and a time of flight is measured from a time offset between a transmission of its own light signal and a reception of the other light signal.

6. A method in accordance with claim 5,
wherein the transmission time is shifted for the synchronization at the one camera (10a-b) such that its own light signal is transmitted simultaneously with the reception of the other light signal, in particular in a phase lock loop.

7. A method in accordance with any one of the preceding claims,
wherein the pose is determined in six degrees of freedom in that the distance between the cameras (10a-b) is measured by a time of light process or at least one camera (10a-b) is configured as a 3D camera and measures the distance between the cameras (10a-b).

8. A method in accordance with any one of the preceding claims,
wherein the pose is determined in six degrees of freedom in that the distance between the cameras (10a-b) is measured by a bilateral light signal exchange.

9. A method in accordance with any one of the preceding claims,
wherein both at least one marker has an asymmetry and the orientation of the marker is recognized with reference to the asymmetry to determine the third angle of the orientation of the second camera (10b) and at least one marker as the active marker transmits a polarized light signal and the third angle of the orientation of the second camera (10b) is again determined by determining the polarization direction on the recording to more exactly determine the third angle by a mutual plausibilization or offsetting of the double determination, in particular to resolve an ambiguity modulo 180° of the polarization direction with reference to the asymmetry.

10. A system comprising a first camera (10a) having a first marker and a second camera (10b) having a second marker, wherein the cameras (10a-b) are mutually located in their respective fields of view (18), and comprising a control and evaluation unit (28) that is configured to carry out a method in accordance with any one of the preceding claims, for determining a pose of the first camera (10a) relative to the second camera (10b).

## Revendications

1. Procédé mis en oeuvre par ordinateur pour déterminer une pose d'une première caméra (10a) par rapport à une deuxième caméra (10b), les caméras (10a-b) se trouvant mutuellement dans leur champ de vision respectif (18) et enregistrant chacune au moins une image, et la pose étant déterminée par évaluation des images,
dans lequel
la première caméra (10a) présente un premier marqueur et la deuxième caméra (10b) présente un deuxième marqueur, une position respective des marqueurs est localisée dans les images enregistrées, et deux angles respectifs de l'orientation de la caméra (10a-b) enregistreuse sont déterminés à partir de la position respective,
**caractérisé en ce que**
au moins un marqueur présente une asymétrie, et l'orientation du marqueur est reconnue à l'aide de l'asymétrie, afin de déterminer le troisième angle de l'orientation de la deuxième caméra (10b),
et/ou **en ce qu'**au moins un marqueur, à titre de marqueur actif, émet un signal lumineux polarisé, et le troisième angle de l'orientation de la deuxième caméra (10b) est déterminé par détermination de la direction de polarisation lors de l'enregistrement.

2. Procédé selon la revendication 1,
dans lequel un angle d'azimut et un angle d'élévation de la première caméra (10a) sont déterminés à partir de la position du deuxième marqueur, et/ou un angle de tangage et un angle de lacet de la deuxième caméra (10b) sont déterminés à partir de la position du premier marqueur.

3. Procédé selon l'une des revendications 1 ou 2,
dans lequel au moins une caméra (10a-b) est conçue comme une caméra basée sur les événements.

4. Procédé selon l'une des revendications précédentes,
dans lequel la distance entre les caméras (10a-b) est mesurée par un procédé de temps de vol de lumière, et/ou l'une au moins des caméras (10a-b) est conçue comme une caméra 3D.

5. Procédé selon l'une des revendications précédentes,
dans lequel la distance entre les caméras (10a-b) est déterminée par un échange bilatéral de signaux lumineux du fait que le premier un marqueur et le deuxième marqueur, à titre de marqueurs actifs, émettent chacun un signal lumineux à des instants définis, et un temps de vol de lumière est mesuré à partir d'un décalage temporel entre l'émission de leur propre signal lumineux et la réception de l'autre signal lumineux.

6. Procédé selon la revendication 5,
dans lequel, pour la synchronisation, au niveau de l'une des caméras (10a-b), l'instant d'émission est décalé de telle sorte que le propre signal lumineux est émis en même temps que l'autre signal lumineux est reçu, en particulier dans une boucle à phase asservie.

7. Procédé selon l'une des revendications précédentes,
dans lequel la pose est déterminée dans six degrés de liberté du fait que la distance entre les caméras (10a-b) est mesurée par un procédé de temps de vol de lumière ou qu'au moins une caméra (10a-b) est conçue comme une caméra 3D et mesure la distance entre les caméras (10a-b).

8. Procédé selon l'une des revendications précédentes,
dans lequel la pose est déterminée dans six degrés de liberté du fait que la distance entre les caméras (10a-b) est mesurée par un échange bilatéral de signaux lumineux.

9. Procédé selon l'une des revendications précédentes,
dans lequel, à la fois,
au moins un marqueur présente une asymétrie, et l'orientation du marqueur est reconnue à l'aide de l'asymétrie, afin de déterminer le troisième angle de l'orientation de la deuxième caméra (10b), et
au moins un marqueur, à titre de marqueur actif, émet un signal lumineux polarisé, et le troisième angle de l'orientation de la deuxième caméra (10b) est à nouveau déterminé par détermination de la direction de polarisation lors de l'enregistrement, afin de déterminer plus précisément le troisième angle par plausibilisation mutuelle ou par calcul de la double détermination, en particulier afin de résoudre une ambiguïté modulo 180° de la direction de polarisation à l'aide de l'asymétrie.

10. Système comprenant une première caméra (10a) avec un premier marqueur et une deuxième caméra (10b) avec un deuxième marqueur, les caméras (10a-b) se trouvant mutuellement dans leur champ de vision respectif (18), ainsi qu'une unité de commande et d'évaluation (28) qui est conçue pour mettre en oeuvre un procédé selon l'une des revendications précédentes pour déterminer une pose de la première caméra (10a) par rapport à la deuxième caméra (10b).
